# EUROPÄISCHE PATENTANMELDUNG

(11) **EP 0 993 789 A2**
(43) Veröffentlichungstag der Anmeldung: **19.04.2000**
(21) Anmeldenummer: 99120293.8
(22) Anmeldetag: 12.10.1999
(51) Int. Cl.: A45F 5/00, H04M 1/04

(54) **Clipverriegelung mittels Spreizdübelverschluss für einen tragbaren Telefonapparat**

(30) Priorität: 13.10.1998 DE 19847017
(71) Anmelder: ROBERT BOSCH GMBH, 70442 Stuttgart (DE)
(72) Erfinder: Barsch, Klaus, 38315 Hornburg (DE); Strohmeyer, Andreas, 38302 Wolfenbuettel (DE)

(57) **Zusammenfassung**

Es wird ein elektrisches Gerät, insbesondere ein transportabler Telefonapparat, mit einem an seiner Gehäusewand (2) zu befestigenden Ansteckclip (7, 20) vorgeschlagen. Ein an dem Ansteckclip angeformter Schaft (14, 22) mit Schaftende (16, 24) ist in eine Gehäuseaussparung (4) einsteckbar und wirkt mit einem an der Gehäusewand (2) angebrachten verformbaren Kragen (6) derart zusammen, daß der Ansteckclip durch Drehung mit der Gehäuseausenfläche verrastbar ist.

## Beschreibung

### Stand der Technik

Die Erfindung geht von einem elektrischen Gerät, insbesondere einem schnurlosen Telefonapparat, nach der Gattung des Hauptanspruchs aus.

Aus der DE 196 47 979 C1 ist ein Handapparat, insbesondere ein Schnurlostelefon, bekannt, welcher ein Gehäuse und ein Trageteil umfaßt. Das Trageteil ist in eine etwa kreisförmige Öffnung des Gehäuses einsetzbar, in welche eine Rastnase des Trageteils einrastet.

### Vorteile der Erfindung

Das erfindungsgemäße elektrische Gerät mit den Merkmalen des Hauptanspruchs hat demgegenüber den Vorteil, daß eine einfache und stabile Befestigung des Ansteckclips realisiert wird, wobei die benötigte Gehäuseöffnung in der Gehäusewand von ihren Abmessungen her relativ klein ausgeführt wird. Vorteilhaft ist, daß dadurch das Gehäuseinnere besser gegen äußere Einflüsse geschützt ist. Eine Schutzblende (zum Beispiel als Abdeckstopfen ausgeführt) ist somit nicht notwendig. Durch die kleinere Öffnung im Gehäuse ist ebenfalls dessen Stabilität höher, was sich in Materialeinsparung, Gewichts- sowie Kostenreduktion niederschlägt.

Durch die in den Unteransprüchen aufgeführten Maßnahmen sind vorteilhafte Weiterbildungen und Verbesserungen des im Hauptanspruch angegebenen elektrischen Gerätes möglich. Vorteilhaft ist weiterhin, daß zum Entfernen und zum Verriegeln des Ansteckclips kein Werkzeug benötigt wird. Ein weiterer Vorteil des erfindungsgemäßen elektrischen Gerätes besteht darin, daß die Entfernung bzw. die Verriegelung des Ansteckclips durch Drehung eines Clipverschlusses ohne gleichzeitige Bewegung des gesamten Ansteckclips realisierbar ist. Eine Clipverriegelung mittels erfindungsgemäßem drehbaren Clipverschluß hat zum Beispiel gegenüber einer Verschraubung den Vorteil, keinen Gewindeeinsatz zu benötigen und hilft Montagezeit, Material und Kosten einzusparen.

### Zeichnung

Ausführungsbeispiele der Erfindung sind in der Zeichnung dargestellt und in der nachfolgenden Beschreibung näher erläutert. Es zeigen
Figur 1 einen Ausschnitt der Gehäusewand 2 des elektrischen Gerätes,
Figur 2 den zur Befestigung an der Gehäusewand dienenden Teil des Ansteckclips 7 in Aufsicht,
Figur 3 den Clipverschluß 10 in Vorderansicht und
Figur 4 in Seitenansicht,
Figur 5 die Gehäusewand 2 mit eingerastetem Ansteckclip 7 samt Clipverschluß 10 entlang der Schnittlinie AB aus Figur 1,
Figur 6 eine Schnittdarstellung der Gehäusewand 2 mit verrastetem Ansteckclip 20 entlang der Schnittlinie AB in Figur 1.

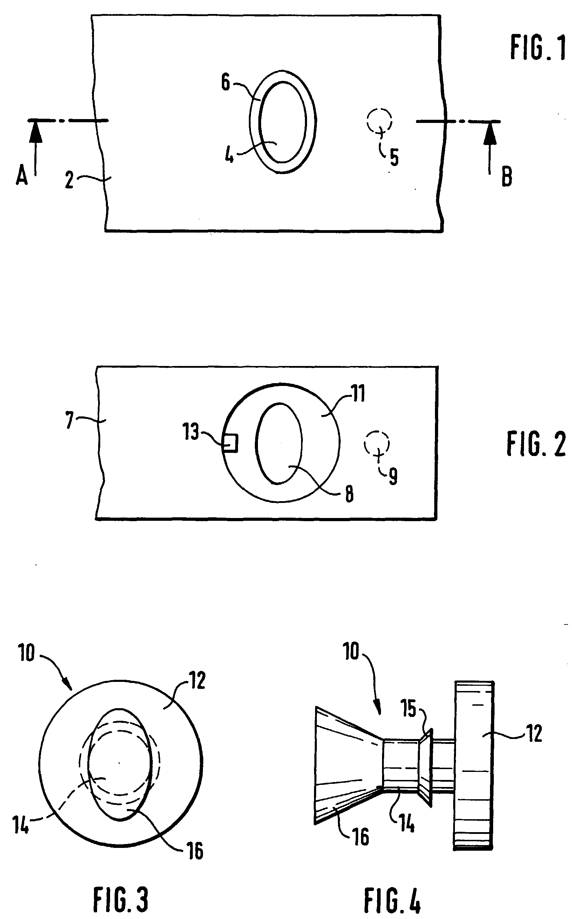

In Figur 1 kennzeichnet 2 die Gehäusewand eines elektrischen Gerätes, 4 eine Öffnung in der Gehäusewand 2, 5 eine Ausnehmung in der Gehäusewand 2 und 6 einen Kragen an der Gehäusewand 2.
In Figur 2 bezeichnet 7 einen Ansteckclip, 8 eine Öffnung im Ansteckclip, 9 eine Auswölbung am Ansteckclip, 11 eine Ausnehmung am Ansteckclip 7 und 13 ein Anschlagelement an der Ausnehmung 11 am Ansteckclip7.
In Figur 3 und 4 kennzeichnet 10 einen Clipverschluß, an welchem 12 ein Verschlußkopf, 14 ein Schaft und 16 ein Schaftende erkennbar sind. Darüberhinaus bezeichnet 15 ein Einrastelement in Figur 4.

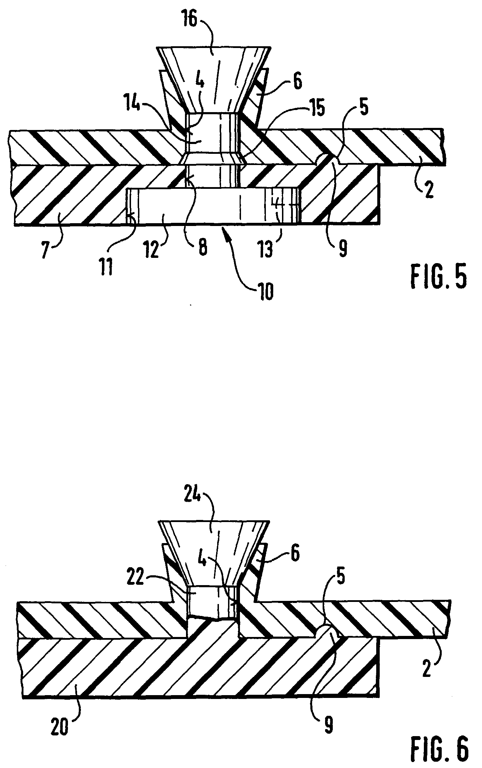

Figur 5 stellt den Ansteckclip 7 in an der Gehäusewand 2 montiertem Zustand dar. Der Verschlußkopf 12 des Clipverschlusses 10 ist in eine Ausnehmung 11 am Clipverschluß 7 versenkbar. Weiterhin ist ein Anschlagelement 13 in der Ausnehmung 11 am Clipverschluß vorgesehen. Der am Verschlußkopf 12 befestigte Schaft 14 des Clipverschlusses 10 ragt durch die Öffnung 8 im Ansteckclip 7 und durch die Öffnung 4 in der Gehäusewand 2 in das Innere des Gehäuses und schließt mit dem Schaftende 16 ab, welches in montiertem Zustand durch seine konisch ovale Form den Kragen 6 verformt. Das Einrastelement 15 befindet sich am Schaft 14 des Clipverschlusses 10 auf der der Gehäusewand 2 zugewandten Seite des Ansteckclip 7. Die Auswölbung 9 am Ansteckclip greift in montiertem Zustand in die Ausnehmung 5 an der Gehäusewand 2 ein und erlaubt so die Arretierung des Ansteckclips.

In unmontiertem Zustand des Ansteckclips 7 an der Gehäusewand 2 ist der Clipverschluß mittels des Einrastelementes 15 am Ansteckclip 7 befestigt. Die Öffnung 8 am Ansteckclip 7 erlaubt es, das Schaftende 16 des Clipverschlusses 10 durchzustecken, wobei die Wandstärke des Ansteckclips im Bereich der Öffnung 8 in etwa dem Abstand entlang des Schaftes 14 zwischen dem Einrastelement 15 und dem Verschlußkopf 12 des Clipverschlusses 10 entspricht. Dadurch ist der Clipverschluß 10 in eingerastetem Zustand im Ansteckclip 7 arretiert und ihm ist lediglich die Möglichkeit einer Drehbewegung gegeben, die durch das Anschlagelement 13 in der Ausnehmung 11 des Ansteckclips 7 begrenzt ist.

Zum Montieren des Ansteckclips 7 an die Gehäusewand 2 wird der Clipverschluß 10, welcher drehbar im Ansteckclip 7 befestigt ist, in eine Stellung gebracht, so daß das Schaftende 16 in die Öffnung 4 in der Gehäusewand 2 einsteckbar ist. Durch Drehung des Clipverschlusses 10 wird das Schaftende 16 ebenfalls gedreht und das Schaftende 16 verformt den verformbaren Kragen 6 elastisch. Durch die elastischen Rückstellkräfte des verformten Kragens 6 in montierter Stellung des Ansteckclips 7 wird der Ansteckclip 7 an der Gehäusewand 2 arretiert. Die konische Form des Schaftendes 16 bewirkt, daß die elastischen Rückstellkräfte, die der Kragen 6 auf das Schaftende 16 ausübt, zu einer Kraftwirkung führen, die einer Anpressung des Ansteckclips 7 an die Gehäusewand 2 bewirkt. Das Anschlagelement 13 in der Ausnehmung 11 am Ansteckclip 7 macht eine weitere Drehung Clipverschlusses 10 und damit des Schaftendes 16 durch die Begrenzung der Drehbewegung des Clipverschlusses 10 im Ansteckclip 7 unmöglich und verhindert so, daß der Ansteckclip 7 von der Gehäusewand 2 gelöst wird, z. B. durch das versehentliche Weiterdrehen des Clipverschlusses 10 vom Benutzer selbst oder durch mechanische Krafteinwirkung, hervorgerufen etwa durch Bewegungen des Benutzers des an seinem Kleidungsstück befestigten elektrischen Gerätes.
Zur Unterstützung der Arretierungswirkung des Schaftendes 16 im Zusammenwirken mit dem Kragen 6 ist an der Gehäusewand 2 eine Ausnehmung 5 vorgesehen, in die die Auswölbung 9 am Ansteckclip 7 hineingreift. Zur Erzielung der mechanischen Stabilität der Befestigung des Ansteckclips 7 an der Gehäusewand 2 und unter Berücksichtigung der Verwendung von Kunststoff sowohl für die Gehäusewand 2 als auch für den Ansteckclip 7 und den Clipverschluß 10 kann die Öffnung 4 in der Gehäusewand 2 erfindungsgemäß relativ klein ausgeführt werden, so daß keine zusätzliche Abdeckung der Öffnung 4 vorgesehen werden muß und ein ausreichender Schutz des Gehäuseinneren gegen äußere Einflüsse auch ohne Abdeckung gewährleistet ist.

Der Verschlußkopf 12, der der leichten und manuellen Drehung des Schaftendes 16 zur Entfernung und zur Verriegelung des Ansteckclips 7 dient, ist von seinem Durchmesser bzw. von seinen Abmessungen und seiner Form her vorzugsweise so gestaltet, daß die Drehung von Hand ausführbar ist, etwa indem ein Mittelsteg als Ansatzpunkt der manuellen Drehung vorgesehen ist.

Figur 6 stellt eine weitere vorteilhafte Ausführungsform der Erfindung dar, in welcher an einen Ansteckclip 20 ein Schaft 22 und ein Schaftende 24 angeformt ist. In dieser Ausführungsform ist ebenfalls eine Öffnung 4 in der Gehäusewand 2 des elektrischen Gerätes vorgesehen, wobei ein Kragen 6 im Bereich der Öffnung 4 an die Gehäusewand 2 angeformt ist. Weiterhin ist ebenfalls, wie im vorangehenden Ausführungsbeispiel, an der Gehäusewand 2 eine Ausnehmung 5 vorgesehen, sowie am Ansteckclip 20 eine Auswölbung 9. Wie im vorangehenden Ausführungsbeispiel bewirkt die konische Form des Schaftendes 24 im Zusammenwirken mit der im wesentlichen durch die ovale Form des Schaftendes 24 hervorgerufenen elastischen Verformung und den entsprechenden Rückstellkräften des Kragens 6 eine Kraftwirkung auf das Schaftende 24, so daß der Ansteckclip 20 an die Gehäusewand 2 herangezogen wird. Zur Montage des Ansteckclips 20 in dem in der Figur 6 dargestellten Ausführungsbeispiel wird der Ansteckclip so an die Gehäusewand 2 angeführt, daß das Schaftende 24 in die Öffnung 4 in der Gehäusewand 2 einstecktar ist. Durch Drehung des Ansteckclips 20 wird der Ansteckclip 20 wie im vorangehenden Beispiel an der Gehäusewand befestigt.

In allen beschriebenen Ausführungsbeispielen wird die Befestigung des Ansteckclips, die jeweils durch Drehung entweder des Ansteckclips selbst oder des Clipverschlusses bewerkstelligt wird, durch eine Drehung von vorzugsweise etwa 90 Grad bewirkt. Hierdurch wird eine schnelle Entfernung und Verriegelung des Ansteckclips (7, 20)an der Außenwand des elektrischen Gerätes möglich.

## Patentansprüche

1. Elektrisches Gerät, insbesondere transportabler Telefonapparat, mit einem an seiner Gehäusewand (2) zu befestigenden Ansteckclip (7), dadurch gekennzeichnet, daß die Öffnung (4) in der Gehäusewand (2) im wesentlichen oval ausgebildet ist, daß die Öffnung (4) einen verformbaren Kragen (6) hat, daß der Ansteckclip (7) eine Öffnung (8) aufweist, die hinsichtlich ihrer Form und ihrer Abmessungen im wesentlichen der Öffnung (4) in der Gehäusewand (2) entspricht, daß ein Clipverschluß (10) mit einem Verschlußkopf (12) einem Schaft (14) und einem Schaftende (16) zur Befestigung des Ansteckclips (7) vorgesehen ist, wobei das Schaftende (16) im wesentlichen eine konisch ovale Form besitzt, wobei der Schaft (14) durch die Aussparung (8) am Ansteckclip (7) durchführbar ist, und wobei das Schaftende (16) mit dem verformbaren Kragen (6) derart zusammenwirkt, daß durch Drehung des Schaftendes (16) der Clipverschluß (10) mit dem Ansteckclip und der Verhäusewand (2) verrastbar ist.

2. Elektrisches Gerät, insbesondere transportabler Telefonapparat, mit einem an einer Gehäusewand (2) befestigbaren Ansteckclip (20), dadurch gekennzeichnet, daß das elektrische Gerät in der Gehäusewand (2) eine im wesentlichen oval ausgebildete Gehäuseaussparung (4) mit einem verformbaren Kragen (6) aufweist, daß der Ansteckclip (20) einen Clipverschluß mit einem Schaft (22) und einem Schaftende (24) aufweist, wobei das Schaftende im wesentlichen eine konisch ovale Form besitzt, wobei der Schaft (22) in die Öffnung (4) in die Gehäusewand (2) einsteckbar ist und wobei das Schaftende (24) mit dem verformbaren Kragen (6) derart zusammenwirkt, daß durch Drehung des Schaftendes (24) der Ansteckclip (20) mit der Gehäusewand (2) verrastbar ist.

3. Elektrisches Gerät nach Anspruch 1, dadurch gekennzeichnet, daß am Schaft (14) des Clipverschlusses (10) ein Einrastelement (15) vorgesehen ist, welches mit der Öffnung (8) am Ansteckclip (7) verrastbar ist.

4. Elektrisches Gerät nach Anspruch 1 oder 3, dadurch gekennzeichnet, daß am Ansteckclip eine Ausnehmung (11) vorgesehen ist, wobei die Ausnehmung (11) den Verschlußkopf (12) des Clipverschlusses (10) zumindest teilweise aufnimmt und mit dem Verschlußkopf (12) zur Arretierung des Ansteckclips (7) zusammenwirkt.

5. Elektrisches Gerät nach einem der vorhergehenden Ansprüche, dadurch gekennzeichnet, daß die erforderliche Drehung zur Verrastung des Ansteckclips (7, 20) mit der Gehäusewand (2) etwa 90 Grad beträgt.

6. Elektrisches Gerät nach einem der vorangehenden Ansprüche, dadurch gekennzeichnet, daß an der Ausnehmung (11) des Ansteckclips (7) zur Aufnahme des Verschlußkopfes (12) des Clipverschlusses (10) ein Anschlagelement (13) vorgesehen ist, wobei das Anschlagelement (13) mit dem Verschlußkopf (12) derart zusammenwirkt, daß die mögliche Drehbewegung des Clipverschlusses (10) begrenzt ist.

7. Elektrisches Gerät nach einem der vorangehenden Ansprüche, dadurch gekennzeichnet, daß eine Ausnehmung (5) an der Gehäusewand (2) und eine Auswölbung (9) am Ansteckclip (7) oder (20) vorgesehen sind, wobei die Ausnehmung (5) mit der Auswölbung (9) derart zusammenwirken, daß im verrasteten Zustand der Ansteckclip (7) gegenüber der Gehäusewand (2) arretiert ist.
